# EUROPEAN PATENT APPLICATION

(11) **EP 4 410 551 A1**
(43) Date of publication of application: **07.08.2024**
(21) Application number: 22874411.6
(22) Date of filing: 01.08.2022
(51) Int. Cl.: B33Y 40/00, B29C 64/307

(54) **ROTATING DISK DEVICE AND CURING MACHINE**

(30) Priority: 28.09.2021 CN 202122365112 U
(71) Applicant: Shenzhen Creality 3D Technology Co., Ltd., Shenzhen, Guangdong 518110 (CN)
(72) Inventor: CHEN, Chun, Shenzhen, Guangdong 518110 (CN); TANG, Jingke, Shenzhen, Guangdong 518110 (CN); GONG, Yun, Shenzhen, Guangdong 518110 (CN)
(74) Representative: Zaboliene, Reda
(86) International application number: PCT/CN2022/109416
(87) International publication number: WO 2023/051015

(57) **Abstract**

Disclosed in the present application are a rotating disk device and a curing machine. The rotating disk device comprises a mounting plate, a bearing plate, an active rotating disk, and a driving member. The bearing plate is rotatably mounted on one side of the mounting plate and in a detachable manner, and the bearing plate is provided with a first magnetic member. The active rotating disk is arranged on the other side of the mounting plate, and a second magnetic member, which is arranged corresponding to the first magnetic member, is arranged on the active rotating disk. The driving member is connected to the mounting plate and cooperates with the active rotating disk, and the driving member is used for driving the active rotating disk to rotate. The bearing plate of the rotating disk device uses an indirect driving structure to cooperate with the driving member, such that the bearing plate is very convenient to mount and dismount, and the mounting plate can utilize a fully closed structure, which facilitates the cleaning of a tabletop by a user.

## Description

### REFERENCES

The present application claims priority to Chinese Application No. 2021223651125 filed on September 28, 2021.

### FIELD

The present application relates to a technical field of 3D printing, particularly to a rotating disk device and curing machine.

### BACKGROUND

With development of the intelligent computer digital technology, 3D printing technology is applied to a wider and wider range of fields. Curing machines are increasingly favored by DIY enthusiasts. The rotating disk of existing curing machine is directly connected to drive member using a direct connection mechanism, so that it is not easy to pick up and put down in working process. Moreover, since the rotating disk of existing curing machine is connected directly to the drive, mounting plate supporting the rotating disk of existing curing machine must be provided with a spindle hole for a spindle to pass through, so that when the user places a model that has not been cured for a second time, the residual resin liquid of the model that has not been cured completely and the alcohol that is mean for cleaning up the surface of the table can easily be spilled into the interior of the machine or the chassis from the spindle hole, which can lead to failure of the equipment in the machine or the chassis.

### SUMMARY

An object of the present application is to propose a rotating disk device, a bearing plate of the rotating disk device applies a magnetically driven structure to cooperate with the driving member, which makes the bearing plate to be very easy to install and remove, and a mounting plate below the bearing plate applies a fully closed structure, which is convenient for the user to clean.

Another object of the present application is to propose a curing machine, the installation and removal of the bearing plate of the curing machine is convenient, and problems that residual resin liquid or alcohol on the bearing plate enters into the interior of the curing machine and leads to the malfunction of the equipment can be avoided.

In order to achieve the above technical effects, the technical solution of the present application is as follows:
The present application discloses a rotating disk device including: a mounting plate; a bearing plate, the bearing plate is detachably and rotatably mounted on one side of the mounting plate, the bearing plate is provided with one or more first magnetic member; an active rotating disk, the active rotating disk is disposed on another side of the mounting plate, the active rotating disk is provided with one or more second magnetic member corresponded with the first magnetic member; a driving member, the driving member is attached to the mounting plate and cooperating with the active rotating disk, the driving member is configured to drive the active rotating disk to rotate. Through the interaction of the first magnetic member and the second magnetic member to drive the bearing plate to rotate, an indirect drive structure is applied to cooperate the bearing plate with the drive member, without the need to set up a spindle hole on the mounting plate, so that the mounting plate is able to completely isolate a printing chamber of a print model of the curing machine from a holding chamber of the mounting drive. The problems of alcohol spilling into the interior of the machine and causing equipment failure is avoided during the process of cleaning the mounting plate. Moreover, since the bearing plate is not directly connected to the driver, it is very convenient to install and remove the bearing plate.

In some embodiments, the rotating disk device further includes: a rotating connector, the rotating connector is connected to the bearing plate; a connecting seat, the connecting seat is sleeved on the rotating connector and mounted on the mounting plate. By using the rotating connector and the connecting seat as a rotatable connecting structure between the bearing plate and the mounting plate, the structure of the mounting plate and the bearing plate are avoided to be provided with additional bumps or grooves, the structures of the mounting plate and the bearing plate are simplified. It is convenient for manufacture of the mounting plate and the bearing plate, and it is also able to avoid the problems that the residual resin liquid and sundry matters during the user's cleaning process are left on the mounting plate or the bearing plate.

In some embodiments, the rotating disk device further includes a supporting plate. The supporting plate is connected to the side of the bearing plate towards the mounting plate. The first magnetic member and the rotating connector is mounted on the supporting plate. As a result, there is no need to mount the first magnetic member on the bearing plate, which further reduces structure of holes and slots on the bearing plate, thereby avoiding residual resin liquid and alcohol from being left on the bearing plate.

In some embodiments, quantity of the first magnetic member is multiple, multiple of first magnetic members are evenly spaced apart along a circumferential direction of the rotating connector. This ensures that the bearing plate rotates stably during the rotation of the active rotating disk, ensuring the working reliability of the curing machine. The first magnetic member is provided with a first fixing hole, and the first magnetic member is fixed to the supporting plate by a first fixing member cooperating in the first fixing hole. The structure of fixing the first magnetic member with the first fixing member ensures the connection stability of the first magnetic member and the supporting plate, and simplifies the connection structure of the first magnetic member and the supporting plate, and facilitates the user to install and replace the first magnetic member.

In some embodiments, the connecting seat is provided with a bearing, and the bearing is sleeved on the rotating connector. The bearing reduces friction between the connecting seat and the rotating connector, which can prolong a using life of the connecting seat and the rotating connector, and improve transmission efficiency and ensure stable rotation of the bearing plate.

In some embodiments, the connecting seat includes a mounting portion and a connecting portion. The bearing is mounted in the mounting portion and locked by a locking member provided on the mounting portion, the connecting portion is connected to the mounting plate. The rotating connector includes an abutting portion and an inserting portion. The abutting portion is connected to the supporting plate, and the inserting portion is inserted in an inner ring of the bearing. In a mounting process of the bearing, the bearing can be placed into the mounting portion and is lock with the locking member, and then insert the rotating connector into the inner ring of the bearing. During disassembly process of the bearing, the locking member is loosened, and the rotating connector is pulled out to unlock the bearing, thus facilitating the user to install and disassemble the connecting seat and the bearing.

In some embodiments, the second magnetic member is provided with a second fixing hole. The second magnetic member is fixed to the active rotating disk by a second fixing member cooperating in the second fixing hole. The structure of fixing the second magnetic member with the second fixing member ensures the stability of the connection of the second magnetic member with the active rotating disk, and simplifies the connection structure of the second magnetic member and the active rotating disk, which facilitates the installation and replacement of the second magnetic member by the user.

In some embodiments, the rotating disk device further includes a fixing base. The fixing base is mounted on the mounting plate, the fixing base is configured to carry the driving member. The fixing base is able to space the driving member and the mounting plate, and the fixing base is able to cushion a part of the vibration generated by the driving member, so as to avoid the occurrence of a large vibration of the mounting plate. The fixing base includes a fixing plate and a connecting column. The fixing plate is configured to carry the driving member, one end of the connecting column is connected to the fixing plate, and another end of the connecting column is connected to the mounting plate. The active rotating disk is provided between the fixing plate and the mounting plate. Thereby reducing a size of an underside of the mounting plate, and making the entire rotating disk device smaller, which is conducive to the miniaturized design of the curing machine.

In some embodiments, the bearing plate is provided with a reflective surface. The reflective surface is configured to reflect light from a curing lamp. This can further enhance curing effect of the model and improve the quality of the printed product.

The present application also discloses a curing machine including the rotating disk device as previously described.

Beneficial effect of the rotating disk device of the present application: since the bearing plate is not directly connected to the drive member, and magnetic drive structure is configured to cooperate the bearing plate with the drive member, there is no need to set up a spindle hole structure on the mounting plate, so that the mounting plate will be able to isolate the printing chamber for the printed model of the curing machine and the holding chamber for the installation of the drive simplicity. When placing the model which has not been cured for a second time, so as to avoid residual resin liquid from models that have not been fully cured and alcohol from cleaning the countertop being spilled into the machine or chassis. Thereby preventing equipment malfunctions inside the machine or chassis. Installing and removing processes of the bearing plate will be easy.

Beneficial effect of the curing machine of the present application: the curing machine has the rotating disk device as described in the preceding paragraph, which makes it easier to install and remove the bearing plate, and can avoid the problems that the residual resin liquid from the model that is not fully cured and the alcohol from cleaning the countertop can easily be spilled from the spindle hole into the inside of the machine or the chassis, when the user puts the model that has not been cured for the second time. Thereby preventing equipment malfunctions inside the machine or chassis.

Additional aspects and advantages of the present application will be given in part in the following description, and in part will become apparent from the following description or through practices of the present application.

### BRIEF DESCRIPTION OF THE DRAWINGS

FIG. 1 is a schematic drawing of a rotating disk device in accordance with an embodiment of the present disclosure.
FIG. 2 is an explosion view of the rotating disk device.
FIG. 3 is an explosion view of part of the rotating disk device.
FIG. 4 is a schematic diagram of a curing machine to an embodiment of the present disclosure.

### Description of main components or elements:

Mounting plate 1, bearing plate 2, active rotating disk 3, driving member 4, supporting plate 5, rotating connector 6, abutting portion 61, inserting portion 62, connecting seat 7, mounting portion 71, connecting portion 72, bearing 8, fixing base 9, fixing plate 91, connecting column 92, buffer pad 10, first magnetic member 101, second magnetic member 102, locking member 103, bottom case 100, stand column 300, curing light 300, build platform 400.

### DETAILED DESCRIPTION

In order to make the technical problems solved, technical solutions, and technical effects achieved by the present application clearer, the technical solutions of the present application are further described below in conjunction with the accompanying drawings and embodiments.

In the description of the present application, terms "center", "longitudinal", "lateral", "length ", "width", "thickness", "top", "bottom", "front", "back", "left", "right", "vertical", "horizontal", "top", "bottom", "inside", "outer", "clockwise", "counterclockwise", "axial", "radial", "circumferential", etc. indicate orientation or positional relationships based on those shown in the accompanying drawings, and are intended only to facilitate the description of the present application and to simplify the description, and are not intended to indicate or imply that the device or element referred to have a particular orientation, and be constructed and operated in a particular orientation. Therefore, it cannot be construed as a limitation of the present application.

In addition, a feature defined as "first" or "second" may expressly or impliedly include one or more of such features for the purpose of distinguishing the descriptive features, in no order and without distinction of importance. In the description of the present application, unless otherwise specified, "more than one" means two or more.

In the description of the present application, unless otherwise expressly specified and limited, the terms "mounted", "coupled", "connected" are to be broadly construed, for examples, it can be a fixed connection or a detachable connection, it may be a fixed connection, a removable connection, or a connection in one piece, it may be a mechanical connection or an electrical connection, it may be a direct connection or an indirect connection through an intermediate medium, and it may be a connection within the two elements. For a person of ordinary skill in the art, the specific meaning of the above terms in the present application may be understood in specific cases.

### First embodiment:

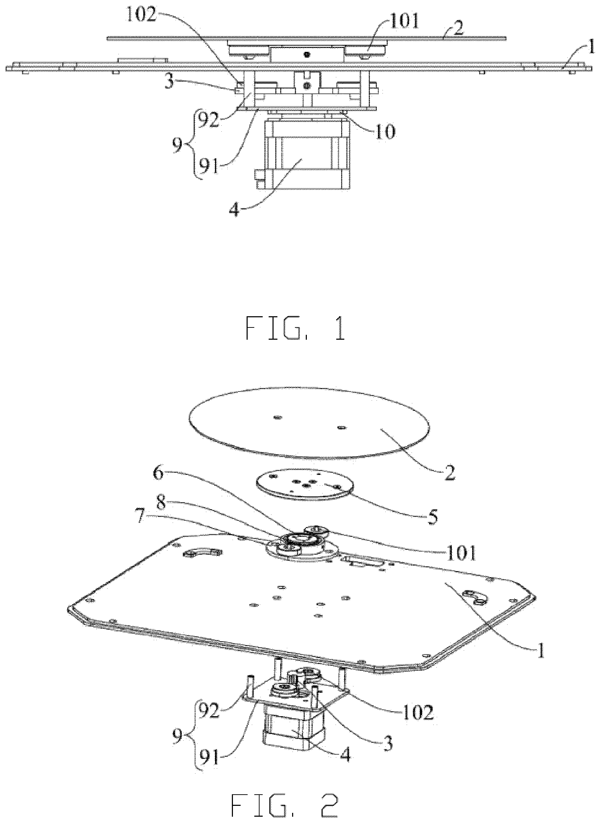

Referring to FIG. 1 to FIG. 3, structure of the rotating disk device of an embodiment of the present application is described below.

The present application discloses a rotating disk device, as shown in FIG. 1 to FIG. 3, the rotating disk device includes a mounting plate 1, a bearing plate 2, an active rotating disk 3, a driving member 4, a supporting plate 5, a rotating connector 6, and a connecting seat 7. The bearing plate 2 is provided on one side of the mounting plate 1. The supporting plate 5 is connected to a side of the bearing plate 2 facing the mounting plate 1 by screws. The supporting plate 5 is provided with one or more first magnetic member 101. The rotating connector 6 is connected to the supporting plate 5 by screws. A connecting seat 7 is sleeved on the rotating connector 6, and the connecting seat 7 is mounted on the mounting plate 1 by screws. The active rotating disk 3 is disposed on another side of the mounting plate 1, and the active rotating disk 3 is provided with one or more second magnetic member 102 corresponded with the first magnetic member 101. The driving member 4 can be a stepping motor. The driving member 4 is connected to the mounting plate 1, a rotating shaft of the driving member 4 coupled with the active rotating disk 3, and the driving member 4 is configured to drive the active rotating disk 3 to rotate.

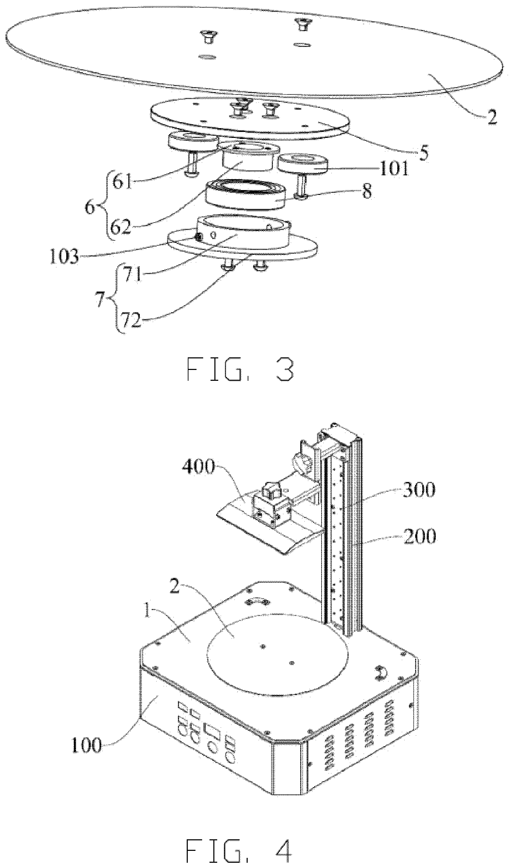

In a working process, when a 3D printer finishes printing the model, the 3D printed model is placed on the bearing plate 2, a curing lamp and the driving member 4 are turned on. When the driving member 4 drives the active rotating disk 3 to rotate, the second magnetic member 102 rotates. When the second magnetic member 102 rotates, the first magnetic member 101 corresponded with the second magnetic member 102 will also rotate under action of electromagnetic effect. The first magnetic member 101 will be able to drive the supporting plate 5 and the bearing plate 2 to rotate in the process of rotation. During the rotation of the bearing plate 2, the curing lamp is able to carry out secondary curing of the model without dead ends. The driving member 4 is not directly connected to the bearing plate 2. The driving member 4 drives the bearing plate 2 to rotate through the interaction of the first magnetic member 101 and the second magnetic member 102. This indirect drive structure eliminates the need to set up a spindle hole for a spindle to pass through on the mounting plate 1. As shown in FIG. 4, the mounting plate 1 isolates a curing space (the space above a base case 100) of the curing model of the curing machine from a holding chamber (the space inside the base case 100) for mounting the drive member 4 and the active rotating disk 3. Thereby avoiding residual resin liquid and alcohol being spilled into the machine or the chassis 100 through the spindle hole, and preventing equipment in the machine or the chassis 100 to malfunction. Since the bearing plate 2 is rotatably disposed on an upper side of the mounting plate 1 and is not directly connected to the drive member 4, installation and removal of the bearing plate 2 is made easy. In addition, the bearing plate 2 and the mounting plate 1 are connected by the rotating connector 6 and the connecting seat 7 avoids the need for the mounting plate 1 and the bearing plate 2 to be provided with an additional raised or grooved structure, simplifies the structure of the mounting plate 1 and the bearing plate 2, facilitates the manufacture of the mounting plate 1 and the bearing plate 2, and avoids the problems of sundry debris being left on the mounting plate 1 or the bearing plate 2 in the course of cleaning by the user.

In one embodiment, the second magnetic member 102 may be a permanent magnet or an electromagnet. The first magnetic member 101 may be a permanent magnet, an electromagnet, or a ferrous element capable of magnetic attraction with the permanent magnet and the electromagnet.

In one embodiment, quantity of the first magnetic members 101 are multiple. Multiple of the first magnetic members 101 are evenly spaced apart along a circumferential direction of the rotating connector 6. Quantity of the second magnetic members 102 are also multiple. Multiple of the second magnetic members 102 and multiple of the first magnetic members 101 are provided in one-to-one correspondence. When the active rotating disk 3 drives multiple of second magnetic members 102 to rotate, multiple of first magnetic members 101 rotate along with the multiple of second magnetic members 102, so that the bearing plate 2 rotates stably during the rotation of the active rotating disk 3, and to ensure the working reliability of the curing machine.

In one embodiment, as shown in FIG. 3, the connecting seat 7 is provided with a bearing 8. The bearing 8 is sleeved on the rotating connector 6. During the process of the driving member 4 driving the active rotating disk 3 to rotate, and the bearing plate 2 is driven to rotate accordingly, relative rotation will occur between the connecting seat 7 and the rotating connector 6, and the bearing 8 is provided to reduce friction between the connecting seat 7 and the rotating connector 6, which is able to prolong a service life of the connecting seat 7 and the rotating connector 6, enhance transmission efficiency, and ensure that the bearing plate 2 rotates stably. In some embodiments, the bearing 8 can be of a type selected in accordance with actual needs, and the specific model of the bearing 8 is not limited herein.

In one embodiment, as shown in FIG. 2 and FIG. 3, the connecting seat 7 includes a mounting portion 71 and a connecting portion 72. The bearing 8 is mounted in the mounting portion 71 and locked by a locking member 103 provided on the mounting portion 71. The connecting portion 72 is connected to the mounting plate 1 by screws. The rotating connector 6 includes an abutting portion 61 and an inserting portion 62, the abutting portion 61 is connected to the supporting plate 5 by screws, and the inserting portion 62 is inserted in the inner ring of the bearing 8. When mounting the bearing 8, the bearing 8 is placed into the mounting part 71 and is lock with the locking member 103, and then insert the rotating connector 6 into the inner ring of the bearing 8, mounting process of the bearing 8 can be done. During disassembling the bearing 8, the locking member 103 loosened and the rotating connector 6 is pulled out, then the bearing 8 can be disassembled easily. Thereby facilitating the user's installation and disassembly of the connector 7 and the bearing 8. In one embodiment, the locking member 103 is a screw.

In one embodiment, the bearing plate 2 is provided with a reflective surface, and the reflective surface is configured to reflect the light of the curing lamp. Thereby the curing effect of the model can be further enhanced, and quality of the printed product can be improved.

In one embodiment, as shown in FIG. 2, the first magnetic member 101 is provided with a first fixing hole. The first magnetic member 101 is fixed to the supporting plate 5 by a first fixing member that fits inside the first fixing hole. In an installation process, the first fixing member is passed through the first fixing hole and then lock the first magnetic member 101 onto the supporting plate 5. This structure of using the first fixing member to fix the first magnetic member 101 ensures the stability of the first magnetic member 101 relative to the connection with the supporting plate 5, and simplifies the connecting structure of the first magnetic member 101 and the supporting plate 5, which facilitates the user to install and replace the first magnetic member 101. In one embodiment, the first fixing member may be screws or pins, which may be selected in accordance with actual needs. In other embodiments, the first magnetic member 101 may also be connected to the supporting plate 5 by a connection method such as bonding. In other embodiments, the first magnetic member 101 is provided with a fixing column, and the supporting plate 5 is provided with a hole that cooperates with the fixing column. Connection method of first magnetic member 101 and the supporting plate 5 is not limited in the present embodiment.

In one embodiment, as shown in FIG. 2, the second magnetic member 102 is provided with a second fixing hole. The second magnetic member 102 is fixed to the active rotating disk 3 by a second fixing member that fits within the second fixing hole. In an installation process, the second fixing member is passed through the second fixing hole and then lock the second magnetic member 102 onto the active rotating disk 3. This structure of using the second fixing member to fix the second magnetic member 102 ensures the stability of the connection of the second magnetic member 102 with the active rotating disk 3, and simplifies the connecting structure of the second magnetic member 102 and the active rotating disk 3, which facilitates the user's installation and replacement of the second magnetic member 102. In one embodiment, the second fixing member may be screws or pins, which can be selected in accordance with actual needs. In other embodiments of the present application, the second magnetic member 102 may also be connected to the active rotating disk 3 by a connection method such as bonding. In one embodiment, the second magnetic member 102 is provided with a fixing column, and the active rotating disk 3 is provided with a hole that cooperates with the fixing column. The connection method of the second magnetic member 102 and the active rotating disk 3 is not limited in the present embodiment.

In one embodiment, as shown in FIG. 1, the rotating disk device further includes a fixing base 9. The fixing base 9 includes a fixing plate 91 and a connecting column 92. The fixing plate 91 is configured to carry the driving member 4. One end of the connecting column 92 is connected to the fixing plate 91, and another end of the connecting column 92 is connected to the mounting plate 1. The active rotating disk 3 is provided between the fixing plate 91 and the mounting plate 1. If the driving member 4 is fixed directly to the mounting plate 1, the vibration generated when the driving member 4 is working will cause the mounting plate 1 to also generate a large vibration, which is not conducive to the normal operation of the rotating disk device. The fixing base 9 separates the drive member 4 and the mounting plate 1, and the fixing base 9 buffers the vibration generated by the drive member 4, thereby avoiding the problems of large vibration of the mounting plate 1. Providing the active rotating disk 3 between the fixing plate 91 and the mounting plate 1 reduces the size of the underside of the mounting plate 1, thereby making the entire rotating disk device smaller, which is conducive to the miniaturized design of the curing machine.

In one embodiment, the fixing base 9 is provided with a buffer pad 10. The buffer pad 10 can reduce the vibration generated during the working process of the driving member 4, thereby avoiding the problems of vibration of the active rotating disk 3 and the bearing plate 2 caused by the vibration of the driving member 4, and ensuring the working stability of the curing machine.

### Second embodiment:

The rotating disk device of the second embodiment has substantially the same structure as that of the first embodiment, with the difference that in the second embodiment, the rotating connector 6 is directly connected to the bearing plate 2 by screws. The first magnetic member 101 is fixed to the bearing plate 2 by screws and is provided around the rotating connector 6.

### Third embodiment:

Referring to FIG. 4, a structure of the curing machine of one embodiment of the present application is described below.

The present application also discloses a curing machine, as shown in FIG. 4, the curing machine comprising a base case 100, the rotating disk device as previously described, and a column 200. An upper end of the base case 100 is an open end, the mounting plate 1 of the rotating disk device is mounted to the open end of the base case 100. A lower end of the column 200 is connected to the mounting plate 1. The column 200 is provided with a plurality of curing lamps 300. The plurality of curing lamps 300 are spaced apart along a vertical direction. The column 200 is also provided with a build platform 400 that can be raised and lowered along the column 200.

A workflow of the curing machine of the third embodiment is as follows: when the 3D printer finishes printing the model, the 3D printed model is placed on the bearing plate 2, the curing lamps 300 and the driving member 4 are turned on. The driving member 4 drives the active carousel 3 to rotate, the second magnetic member 102 is driven to rotate accordingly. When the second magnetic member 102 is rotating, the first magnetic member 101 corresponding to the second magnetic member 102 will also rotate under the action of electromagnetic effect. The first magnetic member 101 will be able to drive the supporting plate 5 and the bearing plate 2 to rotate during the rotation of the first magnetic member 101. The bearing plate 2 rotates to allow the model to receive full-angle light to complete the second curing process, to ensure that the effect of the curing to achieve the strength requirements.

The curing machine includes the rotating disk device as previously described, and during installation process of the rotating disk device, structures such as the active rotating disk 3, the drive member 4, and the fixing base 9 are mounted below the mounting plate 1, while structures such as the bearing plate 2, the supporting plate 5, the rotating connector 6, and the connecting seat 7 are mounted above the mounting plate 1. After the installation of the rotating disk device is completed, the whole rotating disk device is placed on the base case 100, fixing the base case 100 and the mounting plate 1. The mounting plate 1 encapsulates the active rotating disk 3, the driving member 4, and the fixing base 9 and other structures inside the base case 100. The bearing plate 2, the supporting plate 5, the rotating connector 6, and the connecting seat 7 and other structures are located outside of the base case 100. So that the bearing plate 2 is more convenient to install and dismantle, and avoids residual resin liquid and alcohol being spilled into the machine or the base case 100, when the user places the model is not fully cured on the bearing plate. Malfunctioning of the equipment in the machine or the chassis 100 can also be avoided.

In the description, reference to the terms "some embodiments", "other embodiments", and the like means that features, structures, materials, or characteristics described in connection with the embodiments or examples are included in at least one embodiment or example of the present application. Schematic expressions of the above terms do not necessarily refer to the same embodiment or example. Moreover, the features, structures, materials, or characteristics described may be combined in any one or more embodiments or examples in a suitable manner.

For those of ordinary skill in the art, based on the ideas of the present application, there will be changes in the embodiments and the scope of application, and the contents of the specification should not be construed as a limitation of the present application.

## Claims

1. A rotating disk device, comprising:
a mounting plate (1),
a bearing plate (2) detachably and rotatably mounted on one side of the mounting plate (1), the bearing plate (2) being provided with one or more first magnetic member (101),
an active rotating disk (3) provided on another side of the mounting plate (1), the active rotating disk (3) being provided with one or more second magnetic member (102) corresponding to the first magnetic member (101), and
a driving member (4) connected to the active rotating disk (3), the driving member (4) configured to drive the active rotating disk (3) to rotate.

2. The rotating disk device as claimed in claim 1, **characterized in that**, the rotating disk device further comprises:
a rotating connector (6), the rotating connector (6) is connected to the bearing plate (2),
a connecting seat (7), the connecting seat (7) is sleeved on the rotating connector (6), and mounted on the mounting plate (1).

3. The rotating disk device as claimed in claim 2, **characterized in that**, the rotating disk device further comprises a supporting plate (5), the supporting plate (5) is connected to a side of the bearing plate (2) facing the mounting plate (1), the first magnetic member (101) and the rotating connector (6) are mounted on the supporting plate.

4. The rotating disk device as claimed in claim 3, **characterized in that** the rotating disk device comprises multiple of the first magnetic members (101), the multiple of first magnetic members (101) are evenly spaced apart along a circumferential direction of the rotating connector (6), each of the multiple of first magnetic members (101) is provided with a first fixing hole, the first magnetic member (101) is fixed to the supporting plate (5) by a first fixing member cooperating in the first fixing hole.

5. The rotating disk device as claimed in claim 2, **characterized in that**, the connecting seat (7) is provided with a bearing (8), and the bearing (8) is sleeved on the rotating connector (6).

6. The rotating disk device as claimed in claim 5, **characterized in that**, the connecting seat (7) comprise a mounting portion (71) and a connecting portion (72), the bearing (8) is mounted in the mounting portion (71) and locked by a locking member (103) provided on the mounting portion (71), the connecting portion (72) is connected to the mounting plate (1),
the rotating connector (6) comprises an abutting portion (61) and an inserting portion (62), the abutting portion (61) is connected to the supporting plate (5), and the inserting portion (62) is inserted in an inner ring of the bearing (8).

7. The rotating disk device as claimed in claim 2, **characterized in that**, the second magnetic member (102) is provided with a second fixing hole, the second magnetic member is fixed to the active rotating disk (3) by a second fixing member cooperating in the second fixing hole.

8. The rotating disk device as claimed in claim 1, **characterized in that**, the rotating disk device further comprises a fixing base (9), the fixing base (9) is mounted on the mounting plate (1), the fixing base (9) is configured to carry the driving member (4),
the fixing base (9) comprises a fixing plate (91) and a connecting column (92), the fixing plate (91) is configured to carry the driving member (4), one end of the connecting column (92) is connected to the fixing plate (91), and another end of the connecting column is connected to the mounting plate (1), the active rotating disk (3) is provided between the fixing plate (91) and the mounting plate (1).

9. The rotating disk device as claimed in claim 1, **characterized in that**, the bearing plate (2) is provided with a reflective surface, the reflective surface is configured to reflect light from curing lamps.

10. A curing machine, comprising the rotating disk device as claimed in any one of claim 1 to claim 9.
